# EUROPÄISCHE PATENTSCHRIFT

(11) **EP 3 893 021 B1**
(45) Veröffentlichungstag und Bekanntmachung des Hinweises auf die Patenterteilung: **20.03.2024**
(21) Anmeldenummer: 21165921.4
(22) Anmeldetag: 30.03.2021
(51) Int. Cl.: G01S 7/48, G01S 7/495, G01S 17/32, G01S 17/894, G01S 7/497

(54) **VERFAHREN ZUR ERMITTLUNG UND KOMPENSATION VON STREULICHT EINES 3D-LASERSCANNERS**
METHOD FOR DETERMINING AND COMPENSATING FOR SCATTERED LIGHT OF A 3D LASER SCANNER
PROCÉDÉ DE DÉTERMINATION ET DE COMPENSATION DE LA LUMIÈRE DIFFUSE D'UN BALAYEUR LASER 3D

(30) Priorität: 06.04.2020 DE 102020109568
(43) Veröffentlichungstag der Anmeldung: 13.10.2021
(73) Patentinhaber: Zoller & Fröhlich GmbH, 88239 Wangen im Allgäu (DE)
(72) Erfinder: FRÖHLICH, Christoph, 88239 Wangen (DE); METTENLEITER, Markus, 88316 Isny (DE)
(74) Vertreter: Winter, Brandl - Partnerschaft mbB

(56) Entgegenhaltungen:
- US-A1- 2018 284 228
- US-A1- 2020 041 620
- US-A1- 2020 064 453
- US-A1- 2020 072 946

## Beschreibung

Die Erfindung betrifft ein Verfahren zur Ermittlung und Kompensation von Streulicht eines 3D-Laserscanners gemäß Anspruch 1.

Gattungsgemäße Laserscanner dienen der 3D-Erfassung von Objekten basierend auf einer Distanzmessung, bei der die Laufzeit eines Messstrahls aus der Phasenverschiebung des vom Objekt reflektierten Anteils des Messstrahls zum ausgesendeten Messstrahl ermittelt wird. Im Gegensatz zur pulsbasierten Distanzmessung kann die phasenbasierte Methode mehrere Ziele, die im Spot eines Messstrahls liegen, nicht unterscheiden, sondern bildet einen Mittelwert aus den Distanzen und Intensitäten der vom Spot getroffenen Ziele.

Dieses "mehrere Ziele"-Problem tritt beispielsweise dann auf, wenn der Laserspot mehr als ein Ziel beleuchtet, beispielweise wenn er auf die Kante des Objektes trifft. Ein Teil des Laserspots wird dann vom Objekt und ein anderer Teil vom Hintergrund reflektiert. Es entsteht ein fehlerhaftes Messergebnis, das dem Mittel aus Objekt- und Hintergrund-Distanzen und -Intensitäten entspricht. Solche "gemischten Pixel" aus Hintergrund und Objekt treten üblicherweise nur an Kanten des Objektes auf und sind daher per Software im Nachhinein ausfilterbar.

Ein Streulichtanteil des Messstrahls, der direkt vom Sender, beispielsweise einer Laserdiode, hin zum Empfänger, beispielsweise einer Fotodiode, gelangt, ohne zuvor das zu erfassende Objekt getroffen zu haben, kann auf diese Weise jedoch nicht kompensiert werden.

Der Streulichtanteil mischt sich mit dem vom Objekt reflektierten Anteil des Messstrahls und verfälscht so gegebenenfalls Distanz- und/oder Intensitätswerte. In der Regel ist der Streulichtanteil bedeutend kleiner als der reflektierte Anteil des Messstrahls, sodass die gemessenen Distanzen und Intensitätswerte praktisch unverfälscht sind.

Durch äußere Einflüsse aber, wie beispielsweise einer Verschmutzung einer ansonsten transparenten Schutzscheibe von Sender oder Empfänger, kann der Streulichtanteil wesentlich größer werden. Kommt hinzu, dass das vom Messobjekt reflektierte Licht eine geringe Intensität aufweist, weil das Messobjekt entweder weit entfernt, dunkel oder beides ist, kann eine deutliche Verfälschung des Messergebnisses auftreten, die sich unter anderem in zyklischen Phasen- und Amplitudenfehlern äußert. Solche Fehler sind für den Anwender vor Ort nicht erkennbar. Lediglich bei starker Ausprägung sind sie als Deformation in den Messdaten, das heißt in der 3D-Punktewolke, für den Anwender erkennbar. Streulicht kann somit ein ernstes Problem für die Qualität der erfassten Daten darstellen.

Die Druckschrift US 2020/0041620 A1 zeigt ein System und Verfahren zur 3D-Vermessung und Bilderfassung mit einem Time-of-flight Sensor (ToF) und einen Bildsensor. Dabei werden die zu vermessenden und darzustellenden Objekte von einer Lichtquelle gemäß einem Beleuchtungsplan beleuchtet. Der ToF-Sensor liefert dann eine 3D oder Tiefenkarte der Szene.

Die Druckschrift US 2018/0284228 A1 zeigt ein "Light detection and ranging"-System ("Lidar"-System) mit einem Laserscanner, wobei empfangene Lichtsignale auf Streulicht analysiert werden.

Die Druckschrift US 2020/0072946 A1 zeigt ein "Lidar"-System, das reflektiertes und gestreutes Licht empfängt. Dabei ist vorgesehen, aus den Erfassungssignalen und einer erwarteten Streufunktion korrigierte Bilddaten zu erzeugen.

Die Druckschrift US 2020/0064453A1 zeigt einen Laserscanner zur Erzeugung von 3D-Punktewolken, dessen Distanzmessung in Abhängigkeit der Phasenverschiebung des emittierten zum empfangenen Licht erfolgt. Dabei wird sowohl direkte Streuung, vom Sender zum Empfänger, als auch indirekte Streuung kompensiert.

Dem gegenüber liegt der Erfindung die Aufgabe zu Grunde, ein Verfahren zu schaffen, bei dem die Kompensation des genannten Streulichts eines 3D-Laserscanners individueller an bestehende Randbedingungen vor Ort anpassbar ist, sodass die Qualität der erfassten Daten verbesserbar ist.

Diese Aufgabe wird gelöst durch ein Verfahren mit den Merkmalen des Patentanspruchs 1.

Vorteilhafte Weiterbildungen des Verfahrens sind in den Patentansprüchen 2 bis 15 beschrieben.

Ein Verfahren ist zum Ermitteln und Kompensieren eines Streulichtanteils eines Messstrahls eines 3D-Laserscanners vorgesehen. Dieser erzeugt eine 3D-Punktewolke eines zu erfassenden Objektes über das Messprinzip der phasenbasierten Distanzmessung. Als Streulichtanteil ist dabei insbesondere ein Anteil eines von einem Sender des 3D-Laserscanners ausgesendeten Messstrahls zu verstehen, der ohne auf das zu erfassende Objekt zu treffen, vom Sender zu einem Empfänger des 3D-Laserscanners gelangt. Erfindungsgemäß weist das Verfahren eine Auswahl zweier wahlweise einzeln oder in Kombination anwendbarer Schrittfolgen zur Ermittlung von unterschiedlichen Streulichtparametern auf. Ob nur eine der Beiden oder beide Schrittfolgen angewendet werden, kann insbesondere von Randbedingungen abhängig entschieden werden, unter denen die Erfassung erfolgt. So kann dies in Abhängigkeit der Umgebung, ob die Erfassung beispielsweise "outdoor" oder "indoor" erfolgt, oder ob eine Sicht auf freien Himmel vorliegt, entschieden werden. Auch eine geforderte Genauigkeit, und ob diese bereits durch nur eine der Schrittfolgen erreichbar ist, oder ob beide Schrittfolgen hierfür notwendig sind, kann hierauf Einfluss nehmen. Die Entscheidung kann insbesondere durch einen Bediener manuell oder automatisiert durch eine Steuereinheit des 3D-Laserscanners getroffen werden. Eine erste der Schrittfolgen zeichnet sich dadurch aus, dass über sie erste Parameter des Streulichtanteils ermittelt werden, und dass diese Ermittlung unabhängig von der noch zu erfassenden oder der bereits erfassten 3D-Punktewolke erfolgt. Die erste Schrittfolge "braucht" somit die 3D-Punktewolke gar nicht und kann daher insbesondere vor deren Erfassung oder währenddessen, zwischen Erfassungen einzelner 3D-Punkte, angewendet werden. Die erste Schrittfolge ist also proaktiv wirksam. Die zweite Schrittfolge hingegen basiert darauf, dass zweite Parameter des Streulichtanteils in Abhängigkeit von der erzeugten 3D-Punktewolke ermittelt werden. Sie ist somit nacharbeitend oder korrigierend wirksam. Die Kompensation des Streulichtanteils erfolgt dann in einem Schritt Kompensieren des Streulichtanteils in Abhängigkeit der ersten Parameter und/oder der zweiten Parameter, je nachdem, ob nur die erste, nur die zweite oder beide Schrittfolgen angewendet wurden.

Durch die wahlweise Ausführung nur einer oder beider Schrittfolgen ermöglicht es das erfindungsgemäße Verfahren, das Streulicht des 3D-Laserscanners auf flexible Art an bestehende Randbedingungen vor Ort angepasst kompensieren zu können. So ist die Qualität der Streulicht-Kompensation, und in Folge die Qualität der erfassten Daten, verbessert.

In einer Weiterbildung werden die zwei Schrittfolgen, entweder einzeln oder in Kombination, abhängig von einer vom 3D-Laserscanner erfassten Umgebung, verwendet.

Insbesondere durch die Verwendung beider Schrittfolgen ist der Streulichtanteil nicht nur vor der Erfassung am Laserscanner selbst ermittelbar oder erkennbar, sondern kann auch während der Erfassung des Objektes oder noch danach exakt ermittelt und kompensiert werden. So können selbst größere Intensitäten des Streulichtanteils (insbesondere bei einem verschmutzten Rotor-Glas, welches einen Austritt des Senders darstellt) keine Auswirkungen mehr auf erfasste Distanz- und Intensitäts-Werte der erfassten 3D-Punkte des Objektes haben.

Das jeweilige Ermitteln und das Kompensieren erfolgt vorzugsweise über eine Steuereinheit des 3D-Laserscanners.

In einer Weiterbildung hat die erste Schrittfolge einen Schritt, bei dem ein Messstrahl über den Sender in einen Raumabschnitt abseits des Objekts gesendet wird, wobei der Raumabschnitt keine Reflektivität oder lediglich eine hinreichend geringe Reflektivität aufweist. Hinreichend bezieht sich dabei darauf, dass ein Reflexionsanteil des Raumabschnitts gegenüber dem Streulichtanteil vernachlässigbar ist. Da also keine Reflexion erfolgt, muss ein vom Empfänger empfangbares Signal das des Streulichtanteils des Messstrahls sein.

Der Raumabschnitt kann je nach Umgebung der Erfassung ausgewählt werden. Wichtig dabei ist zumindest das oben genannte Kriterium zur Reflexion. In einer Weiterbildung ist der Raumabschnitt ein hinreichend objektfreier Himmelsabschnitt, also insbesondere ein frei sichtbarer Himmelsabschnitt ohne Objekte wie Abdachungen, Stromleitungen, Wolken, Nebel, Staub, die für eine störende Reflexion sorgen würden.

Sollte vom Standort des 3D-Laserscanners kein solcher Raumabschnitt in Sicht sein, beispielsweise aufgrund der Wetterlage oder weil die Erfassung in einem Gebäude (indoor) erfolgt, so kann in einer Alternative der Raumabschnitt als eine Tafel, eine Box oder dergleichen mit absorbierender Beschichtung, insbesondere mit einer VANTA-Beschichtung (Vertically Aligned Nano Tube Array) ausgebildet sein. Diese ist derart schwarz, dass sie sogar einen Messstrahl eines 3D-Laserscanners ausreichend absorbieren kann.

Die Auswahl von geeigneten Raumabschnitten kann in einer Weiterbildung manuell oder über die Steuereinheit zumindest in Abhängigkeit ihrer Reflexionsgrade und/oder Elevationswinkel und eines jeweils zugeordneten Kriteriums erfolgen. Die erste Schrittfolge ist in der Weiterbildung um diesen Schritt ergänzt.

Im Anschluss weist die erste Schrittfolge in einer Weiterbildung Schritte Empfangen des Streulichtanteils des gesendeten Messstrahls, über einen Empfänger des 3D-Laserscanners, und Ermitteln der ersten Parameter des Streulichtanteils, über eine Steuereinheit des Laserscanners auf.

In einer Weiterbildung kann die Kompensation des Streulichts mittels der ersten Parameter auf eine breitere Datenbasis gestellt werden, indem die erste Schrittfolge in mehreren Raumabschnitten, die die oben genannte Reflexionseigenschaft aufweisen, ausgeführt wird, wobei die dabei ermittelten ersten Parameter über die Raumabschnitte gemittelt werden. Dies geschieht vorzugsweise über die Steuereinheit. Dies geschieht vor und/oder während der laufenden Erfassung der 3D-Punktwolke, während der Laserscanner ohnehin einen Drehwinkel von bis zu 360° horizontal und einen Elevationswinkel von bis zu 320° vertikal abtastet.

Als erste Parameter, insbesondere zum Quantifizieren des Streulichtanteils, eignen sich zumindest eine Intensität des Streulichtanteils und dessen Phasenverschiebung zum gesendeten Messstrahl, oder bei mehreren Raumabschnitten das jeweilige Mittel.

Mit dem Ziel einer Steigerung der Qualität der Kompensation geht in einer Weiterbildung nur eine Untermenge der wie oben beschrieben ausgewählten Raumabschnitte in das Ermitteln der ersten Parameter oder von deren Mittel ein.

Das Verfahren hat in einer Weiterbildung Schritte zum Erzeugen der 3D-Punktewolke: Senden eines Messstrahls auf das Objekt, über den Sender; Empfangen eines Anteils des Messstrahls, über den Empfänger; Ermitteln von Parametern Intensität des Anteils und Phasenverschiebung des Anteils zum gesendeten Messstrahl, über die Steuereinheit; Erzeugen eines 3D-Punktes, in Abhängigkeit dieser Parameter, über die Steuereinheit; und Erzeugen der 3D-Punktewolke, durch wiederholtes Senden des Messstrahls aufs Objekt, Empfangen des Anteils des Messstrahls, Ermitteln der Parameter und Erzeugen des 3D-Punktes, über die Steuereinheit.

Aufbauend auf der 3D-Punktewolke, also in Abhängigkeit von dieser, kann die zweite Schrittfolge - mit oder ohne erste Schrittfolge - zur Kompensation des Streulichtanteils zur Anwendung kommen.

In einer Weiterbildung des Verfahrens hat die zweite Schrittfolge einen Schritt Analysieren der 3D-Punktewolke auf vom Streulichtanteil abhängige Wellen oder auf eine derartige Wellenstruktur und einen Schritt Ermitteln der zweiten Parameter aus den Wellen oder der Wellenstruktur; beide Schritte werden vorzugsweise über die Steuereinheit ausgeführt.

Die Analyse der Wellen oder Wellenstruktur erfolgt in einer Weiterbildung darauf basierend, dass sich die aus dem Streulichtanteil resultierenden Wellen der 3D-Punktewolke durch eine charakteristische Abhängigkeit ihrer Wellenlänge und Wellenhöhe von ihrer Pixel-Intensität auszeichnen. Auf diese charakteristische Abhängigkeit wird die 3D-Punktewolke über die Steuereinheit analysiert und die Wellen der 3D-Punktewolken, die diese Abhängigkeit zeigen, werden identifiziert.

In einer Weiterbildung werden dann die zweiten Parameter, insbesondere eine Intensität des Streulichtanteils und eine Phasenverschiebung des Streulichtanteils zum Messstrahl, aus Intensitäten und Phasen der identifizierten Wellen geschätzt und/oder ermittelt.

In einer Weiterbildung des Verfahrens, in dem zumindest wie oben bereits beschrieben die ersten Parameter ermittelt wurden, ein Messstrahl auf das Objekt gesendet wurde, von diesem der Anteil des Messstrahls reflektiert wurde und die Parameter des Anteils ermittelt wurden, erfolgt das Erzeugen des 3D-Punktes dann in Abhängigkeit der Parameter des Anteils und der ersten Parameter des Streulichtanteils. Insbesondere wird dazu die Differenz aus Anteil und Streulichtanteil gebildet. Genauer gesagt wird zur Ermittlung der Intensität des 3D-Punktes von der Intensität des Anteils die Intensität des Streulichtanteils abgezogen. Zur Ermittlung der Distanz des 3D-Punktes wird von der Phasenverschiebung des Anteils diejenige des Streulichtanteils abgezogen. Dieses Erzeugen und eine Ablage des 3D-Punktes erfolgen über die Steuereinheit.

Unabhängig davon, ob die erste Schrittfolge und die damit verbundene Kompensation von Streulicht bereits ausgeführt wurde, hat die zweite Schrittfolge in einer Weiterbildung einem Schritt Korrektur der 3D-Punktewolke in Abhängigkeit der Parameter und der zweiten Parameter, insbesondere in Abhängigkeit von deren Differenz. Dieses Erzeugen und eine Ablage der 3D-Punktewolke erfolgen über die Steuereinheit.

Natürlich lassen sich nicht beliebig große Intensitäten des Streulichtanteils kompensieren. Für den Fall, dass der Streulichtanteil als zu hoch ermittelt wird, wenn beispielsweise eine transparente Abdeckung des Senders, durch die der Messstrahl ausgesendet wird, zu stark verschmutzt ist, hat das Verfahren in einer Weiterbildung daher einen Schritt, der die Erfassung verhindert, unterbricht und/oder eine Warnmeldung ausgibt. Ein Kriterium zum Auslösen des oder der Schritte ist in einer Weiterbildung, ob der ermittelte Streulichtanteil, insbesondere dessen Intensität, oberhalb eines vorbestimmten, insbesondere in der Steuereinheit abgelegten Grenzwertes liegt. Als Warnmeldung ergeht beispielsweise eine Aufforderung an einen Bediener, die Abdeckung oder Rotor-Scheibe zu putzen und ggf. den Laserscan zu wiederholen.

In einer Weiterbildung wird das Verfahren von einem oder von mehreren Standorten des 3D-Laserscanners aus ausgeführt.

In einer Weiterbildung hat der 3D-Laserscanner einen transparenten Austritt des Senders zum Aussenden des Messstrahls und, in räumlicher Nähe oder zusammenfallend mit dem Austritt, einen transparenten Eintritt des Empfängers zum Empfangen zumindest des vom Objekt reflektierten Anteils des Messstrahls.

Erfindungsgemäß ist die Steuereinheit derart ausgestaltet, dass in ihr das Verfahren zur Ermittlung und Kompensation des Streulichtanteils, das nach wenigstens einem Aspekt der vorhergehenden Beschreibung ausgestaltet ist, zur Ausführung gespeichert ist.

Die Anmeldering behält sich vor, ein Patentbegehren auf einen 3D-Laserscanner gemäß wenigstens einem Aspekt der vorangegangenen Beschreibung zu richten.

Im Folgenden wird ein Ausführungsbeispiel eines erfindungsgemäßen Verfahrens in den Figuren näher erläutert. Es zeigen:
Figur 1 einen erfindungsgemäßen 3D-Laserscanner, in dem ein erfindungsgemäßes Verfahren zur Ausführung abgelegt ist;
Figur 2 den Laserscanner gemäß Figur 1, dargestellt im Querschnitt in seiner Messumgebung und mit einem zu erfassenden Objekt;
Figur 3 den Laserscanner gemäß Figur 2 beim Erfassen des Objektes;
Figur 4 eine fehlerbehaftete 3D-Punktewolke des Objektes; und
Figur 5 eine 3D-Punktewolke des Objektes.

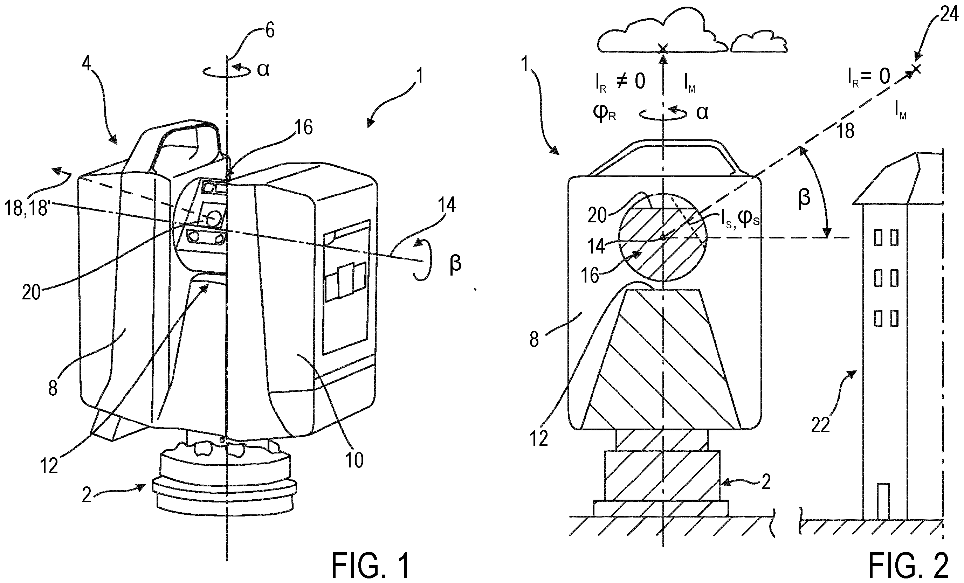

Figur 1 zeigt einen 3D-Laserscanner 1 mit einem Sockel 2 und einem daran angesetzten Gehäuse 4. Letztgenanntes ist um eine Hochachse 6 über einen im Sockel 2 integrierten Motor (nicht dargestellt) mit einem Drehwinkel α drehbar. Das Gehäuse 4 weist zwei im wesentlichen symmetrische Abschnitte 8, 10 auf, die Akkus, Elektronik, eine Steuereinheit und andere Komponenten des Laserscanners 1 tragen. Mittig zwischen den Abschnitten 8, 10 ist das Gehäuse mit einem Joch 12 ausgebildet, über das die Abschnitte 8, 10 verbunden sind. Oberhalb des Jochs 12 ist ein um eine Querachse 14 mit dem Elevationswinkel β rotierbarer Messkopf 16 aufgenommen, über den ein Messstrahl 18 auf ein zu erfassendes Objekt 22 aussendbar ist. Der Messkopf 16 hat eine transparente Abdeckscheibe 20, hinter der eine Umlenkoptik zum Aussenden Messstrahls 18 und schließlich zum Empfangen eines reflektierten Anteils 18' des Messstrahls 18 geschützt ist. Zum Erfassen des Objektes rotieren der Laserscanner 1 um seine Hochachse 6 mit bis zu 360° und der Messkopfs 18 um seine Querachse 14 um bis zu 320°.

Ein derartiger Laserscanner 1 ist, bis auf das im folgenden geschilderte Verfahren, hinreichend aus dem Stand der Technik, beispielsweise als Imager^{®} 5016 der Anmelderin bekannt, so dass weitere Erläuterungen diesbezüglich entbehrlich sind.

Figur 2 zeigt den Laserscanner 1 gemäß Figur 1 in einem Querschnitt in seiner Messumgebung und mit dem zu erfassenden Objekt 22. Der Laserscanner 1 ist geschnitten dargestellt, wobei die Schnittebene von der Hochachse 6 aufgespannt ist, so dass sie eine Symmetrieebene der beiden Abschnitte 8, 10 des Gehäuses 4 bildet. Geschnittene Bereich sind dabei zur Vereinfachung der Darstellung schraffiert, obwohl sie in Realität natürlich in gewissem Maße hohl sind, um die vorgenannten Komponenten beinhalten zu können.

Der Laserscanner 1 steht beim dargestellten Ausführungsbeispiel des Verfahrens im Freien (outdoor), kann aber auch indoor verwendet werden. Das Objekt (Haus) 22 ist in vergleichsweise großer Distanz zum Laserscanner 1 angeordnet. Derartige Erfassungen über große Distanzen sind besonders anfällig für Fehler von Streulicht. Als Streulicht oder Streulichtanteil wird Licht bezeichnet, das vom Sender des Laserscanners direkt zum Empfänger gelangt, ohne das zu erfassende Objekt 22 getroffen zu haben. Oft ist hierfür eine Verschmutzung der Abdeckscheibe 20 des Messkopfs 16, in welchem der Austritt des Senders und der Eintritt des Empfängers angeordnet sind, verantwortlich. Diese Verschmutzung führt zur genannten Streuung.

Jedem gesendeten Messstrahl 18 mit der Intensität I_{M} ist bei entsprechender Verschmutzung der Abdeckscheibe 20 somit eine Intensität Is des Streulichtanteils des Messstrahls 18 und eine Phasenverschiebung ϕ_{S} des Streulichtanteils bezogen auf den gesendeten Messstrahl 18 zugeordnet. Wie oben dargestellt, summieren sich die Intensitäten I_{R} und I_{S} eines reflektierten Anteils 18' des Messstrahls 18 und des Streulichtanteils des Messstrahls 18. Gleiches gilt für deren Phasenverschiebungen ϕ_{R} und ϕ_{S}. In Folge wird über die Steuereinheit des Laserscanners 1 die 3D-Punktewolke fehlerhaft erfasst, sofern keine Kompensation des Streulichtanteils erfolgt.

Zur Ermittlung und Kompensation dieses Streulichtanteils, und damit zur Erhöhung der Genauigkeit der Erfassung, wird das erfindungsgemäße Verfahren angewandt.

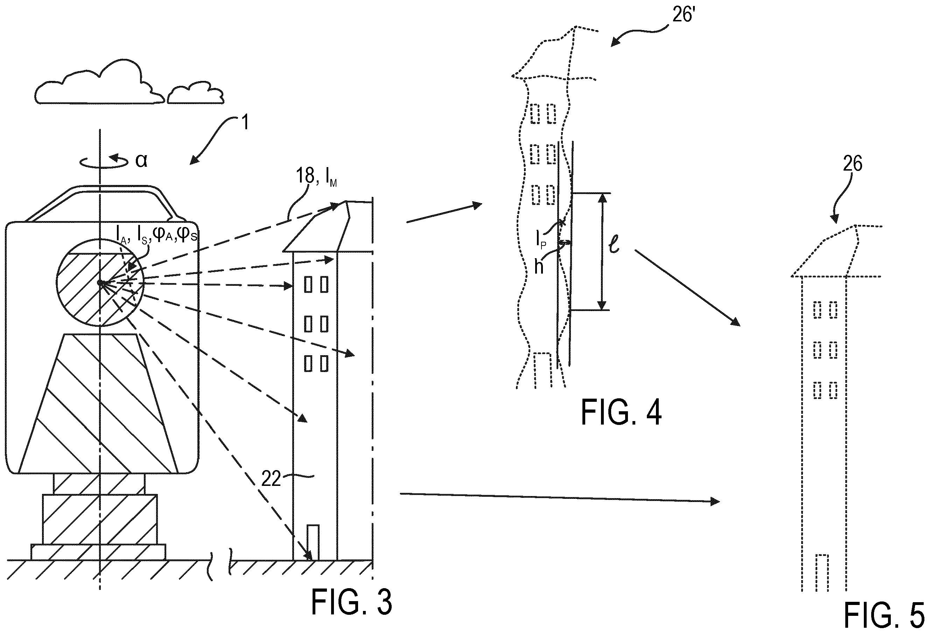

Ausgangssituation hierfür ist im gezeigten Ausführungsbeispiel eine Anordnung des Laserscanners 1 zum Objekt 22 gemäß Figur 3, also unter outdoor-Bedingungen. Das Verfahren kann natürlich auch indoor, also in Innenräumen, in angepasster Variante ausgeführt werden.

Da im Ausführungsbeispiel objektfreier oder zumindest reflexionsarmer Himmel vom Standort des 3D-Laserscanners 1 aus sichtbar ist, wird unabhängig von der 3D-Punktewolke (diese ist noch nicht erfasst) zunächst die erste Schrittfolge des Verfahrens ausgeführt. Gemäß Figur 2 erfolgt dazu zunächst die Ermittlung eines gemäß der vorangegangenen Beschreibung als "objektfrei" bezeichneten Raumabschnitts 24. Dieser erfüllt die Kriterien eines ausreichend hohen Elevationswinkels β und hat idealerweise "null" oder zumindest eine hinreichend geringe Reflektivität. Der im Folgeschritt in diesen Raumabschnitt 24 gesendete Messstrahl 18 kann also nicht reflektiert werden, sodass ein reflektierter Anteil 18' des Messstrahls null ist. Die normalerweise aus der Reflexion resultierenden Parameter I_{R} und ϕ_{R} sind also null. Das dann vom Empfänger empfangene Signal muss demzufolge der Streulichtanteil des Messstrahls 18 mit einer zugehörigen Intensität Is und Phasenverschiebung ϕ_{S} zum ausgesendeten Messstrahl 18 sein. Zu beachten ist dabei natürlich, dass auch ein gewisses Empfangsrauschen, verursacht durch das vorhandene Sonnenlicht und inhärentes Rauschen der Empfangselektronik, vorliegt. Diese aus der ersten Schrittfolge hervorgehenden ersten Parameter I_{S} und ϕ_{S} resultieren in der Regel aus einer Verschmutzung der Abdeckung 20.

Um die Verlässlichkeit und Genauigkeit des ermittelten Streulichtanteils und seiner ersten Parameter I_{S} und ϕ_{S} zu erhöhen, kann die erste Schrittfolge für verschiedene Raumabschnitte 24 durchgeführt werden, wobei am Ende die ersten Parameter I_{S} und ϕ_{S} des Streulichtanteils über die Raumabschnitte 24 gemittelt werden. Um für die Kompensation möglichst gute, mit möglichst geringer Standardabweichung behaftete, erste Parameter I_{S} und ϕ_{S} zu erhalten, wird über einen möglichst weiten Bereich des objektfreien Raumes, also des Himmels, gemittelt.

Die ermittelten ersten Parameter I_{S} und ϕ_{S}, bzw. deren Mittel, gehen beim späteren Schritt des Erzeugens einer 3D-Punktewolke 26 oder 26' des Objektes 22, die auf der Abtastung mit Messstrahlen 18 basiert (vgl. Figur 3), in eine jeweilige Differenz mit den vom Empfänger empfangenen Anteilen der Messstrahlen 18 ein.

Die erste Schrittfolge des Verfahrens kann vor der Erfassung oder während der Erfassung der 3D-Punktewolke, das heißt insbesondere zwischen den Erfassungen einzelner 3D-Punkte, erfolgen.

Um einen objektfreien Raumabschnitt 24 mit null oder hinreichend geringer Reflektion zu ermitteln, weist das Verfahren in der ersten Schrittfolge einen Schritt zur Auswahl solcher Raumabschnitte 24 auf. Diese müssen das Kriterium erfüllen, dass sie einen in der Steuereinheit des Laserscanners 1 abgelegten Grenzwert für eine empfangene Intensität unterschreiten. Auf diese Weise werden Raumabschnitte, die ein weit entferntes Gebäude, Bäume, tiefhängende Wolken, Staub oder dergleichen enthalten, nicht zur Bestimmung der ersten Parameter I_{S} und ϕ_{S} herangezogen.

Die Auswahl der Raumabschnitte 24 erfolgt in der ersten Schrittfolge, indem einzelne Pixel oder 3D-Messpunkte zunächst genau analysiert werden, was anhand Figur 2 beschrieben wurde. Neben dem genannten Kriterium der Intensität ist dabei auch ein abgelegter Elevationswinkel β zu überschreiten, da nur oberhalb dessen mit freiem Himmel gerechnet werden kann. Aus den die Kriterien erfüllenden Raumabschnitten 24 ermittelt in der ersten Schrittfolge ein intelligenter oder proprietärer Algorithmus des Laserscanners 1 diejenigen der Raumabschnitte 24, die tatsächlich zur Ermittlung der ersten Parameter I_{S} und ϕ_{S} des Streulichtanteils herangezogen werden.

Unter günstigen Umständen führt bereits die beschriebene Kompensation auf Basis der ersten Schrittfolge des Verfahrens, also auf Basis der beschriebenen Verrechnung der ersten Parameter I_{S} und ϕ_{S} mit den vom Empfänger empfangenen Signalen, zur 3D-Punktewolkte 26 gemäß Figur 5, die ausreichend exakt ist.

Für den Fall, dass die erste Schrittfolge aufgrund fehlender objektfreier Raumabschnitte 24 nicht ausgeführt werden kann, beispielsweise wenn die Erfassung indoor oder outdoor bei bedecktem oder zumindest diesigem Himmel erfolgt, so weist das erfindungsgemäß flexible Verfahren eine zweite Schrittfolge zur Ermittlung und Kompensation des Streulichtanteils auf, die, anders als die erste Schrittfolge, auf der erfassten 3D-Punktewolke 26' gemäß Figur 4 basiert.

Angenommen sei zunächst die Ausgangslage gemäß Figur 3 mit erfolgtem Ablauf der ersten Schrittfolge gemäß der vorangegangenen Beschreibung. Die erfolgte Ermittlung und Kompensation mit den ersten Parametern I_{S} und ϕ_{S} hat jedoch noch nicht zu einer ausreichend exakten Punktewolke geführt, sodass diese 26' eine deformierte Gestalt aufweist, wie sie beispielhaft in Figur 4 dargestellt ist. Eine solche Gestalt ergibt sich aus größeren Streulichtwerten oder -anteilen, welche bedingt durch einen zyklischen Phasenfehler typische Muster in der erfassten 3D-Punktewolkte 26' erzeugen. Auf Flächen sind diese als Wellen, ähnlich den Wellen einer Wasseroberfläche bei leichtem Wind, zu erkennen. Die Wellen sind allerdings meist zu klein, als dass sie dem Anwender während der Erfassung auffallen könnten. Figur 4 zeigt diese Wellen daher in übertrieben skalierter Darstellung.

Gemäß der zweiten Schrittfolge des Verfahrens wird gezielt nach solchen Wellen in der 3D-Punktewolkte 26' gesucht, bzw. diese darauf analysiert. Die von Streulicht verursachten Wellen der 3D-Punktewolkte 26' weisen einen charakteristischen Zusammenhang ihrer Wellenlänge I und -höhe h in Abhängigkeit ihrer Pixelintensität I auf. Durch einen auf diese Charakteristik gerichteten Schritt zur Analyse der 3D-Punktewolke 26', sind die Wellen, auch die die dem menschlichen Betrachter nicht auffallen würden, von der Steuereinheit des Laserscanners 1 identifizierbar. In einem Folgeschritt der zweiten Schrittfolge lassen sich aus den identifizierten Wellen zweite Parameter des Streulichtanteils schätzen oder ermitteln. Die zweiten Parameter gehen dann in einem weiteren Schritt der zweiten Schrittfolge in die Verrechnung mit den 3D-Punkten der bereits erfassten 3D-Punktewolkte ein. Der verbleibende Fehler des Streulichtanteils, der zu den Wellen gemäß Figur 4 führte wird somit kompensiert. Nach Ausführung der zweiten Schrittfolge liegt nun die korrekte 3D-Punktewolkte 26 gemäß Figur 5 vor.

Alternativ oder ergänzend zur Kompensation kann in Abhängigkeit der ermittelten ersten und/oder zweiten Parameter des Streulichtanteils die Ausgabe einer Warnmeldung erfolgen. Beispielsweise könnte dies eine Aufforderung zum Säubern der Abdeckscheibe 20 oder dergleichen sein.

Offenbart ist ein Verfahren zum Ermitteln und Kompensieren eines Streulichtanteils eines Messstrahls eines 3D-Laserscanners, über den über phasenbasierte Distanzmessung eine 3D-Punktewolke eines zu erfassenden Objektes erzeugbar ist. Das Verfahren weist wenigstens zwei unterschiedliche Schrittfolgen, also Unterverfahren, zum Ermitteln und Kompensieren auf, die je nach Umgebungsbedingungen, Streulichtanteil, Wunsch des Anwenders und/oder dergleichen einzeln oder in Kombination anwendbar sind. Eine der Schrittfolgen ermöglicht die Ermittlung und Kompensation unabhängig von der 3D-Punktewolke, das andere in Abhängigkeit der erfassten 3D-Punktewolke.

### Bezugszeichenliste

- 1: 3D-Laserscanner
- 2: Sockel
- 4: Gehäuse
- 6: Hochachse
- 8, 10: Gehäuseabschnitt
- 10: Gehäuseabschnitt
- 12: Joch
- 14: Querachse
- 16: Messkopf
- 18: Messstrahl
- 18': reflektierter Anteil Messstrahl
- 20: Abdeckscheibe
- 22: Objekt
- 24: Raumabschnitt
- 26: kompensierte 3D-Punktewolkte
- 26': unzureichend kompensierte 3D-Punktewolkte

- α: Drehwinkel
- β: Elevationswinkel
- I: Intensität
- ϕ: Phasenverschiebung
- I_{M}: Intensität Messstrahl
- I_{R}: Intensität reflektierter Anteil
- I_{S}: Intensität Streulichtanteil
- ϕ_{R}: Phasenverschiebung reflektierter Anteil
- ϕ_{S}: Phasenverschiebung Streulichtanteil

## Patentansprüche

1. Verfahren zum Ermitteln und Kompensieren eines Streulichtanteils (I_{S}, ϕ_{S}) eines Messstrahls (18) eines 3D-Laserscanners (1), über den über phasenbasierte Distanzmessung eine 3D-Punktewolke (26, 26') eines zu erfassenden Objektes (22) erzeugbar ist, mit
- einer ersten Schrittfolge, über die erste Parameter (I_{S}, ϕ_{S}) des Streulichtanteils unabhängig von der 3D-Punktewolke ermittelbar sind und
- einer zweiten Schrittfolge, über die zweite Parameter des Streulichtanteils abhängig von der erzeugten 3D-Punktewolke (26') ermittelbar sind, wobei das Verfahren weiterhin folgenden Schritt umfasst:
- Kompensieren des Streulichtanteils in Abhängigkeit der ersten Parameter (I_{S}, ϕ_{S}) und/oder der zweiten Parameter **gekennzeichnet durch** eine Auswahl, ob die erste Schrittfolge oder die zweite Schrittfolge, oder beide, zur Ermittlung der unterschiedlichen Streulichtparameter angewendet wird oder werden.

2. Verfahren nach Anspruch 1, wobei die erste Schrittfolge folgenden Schritt umfasst:
- Senden eines Messstrahls (18) über einen Sender des 3D-Laserscanners (1) in einen Raumabschnitt (24) abseits des Objekts, der keine Reflektivität oder eine hinreichend geringe Reflektivität aufweist.

3. Verfahren nach Anspruch 2, wobei der Raumabschnitt (24) ein hinreichend objektfreier Himmelsabschnitt ist, oder wobei der Raumabschnitt eine Tafel oder eine Box mit absorbierender Beschichtung ist.

4. Verfahren nach Anspruch 2 oder 3, wobei die erste Schrittfolge zudem folgende Schritte umfasst:
- Empfangen des Streulichtanteils des gesendeten Messstrahls über einen Empfänger des 3D-Laserscanners, und
- Ermitteln der ersten Parameter (I_{S}, ϕ_{S}) des Streulichtanteils, über eine Steuereinheit des Laserscanners (1).

5. Verfahren nach Anspruch 4, wobei die erste Schrittfolge in mehreren Raumabschnitten (24) ausgeführt wird und um einen Schritt
- Mitteln der ersten Parameter (I_{S}, ϕ_{S}) über die Raumabschnitte (24), über die Steuereinheit ergänzt ist.

6. Verfahren nach einem der Ansprüche 2 bis 5, wobei die ersten Parameter zumindest eine Intensität (Is) des Streulichtanteils und dessen Phasenverschiebung (ϕ_{S}) zum gesendeten Messstrahl (18), oder deren Mittel sind.

7. Verfahren nach einem der Ansprüche 2 bis 6, wobei die erste Schrittfolge um einen Schritt
- Auswählen des oder der Raumabschnitte (24) zumindest in Abhängigkeit ihres Reflexionsgrades und/oder Elevationswinkels (β) und eines zugeordneten Kriteriums, über die Steuereinheit ergänzt ist.

8. Verfahren nach Anspruch 7, wobei eine Untermenge der ausgewählten Raumabschnitte (24) in das Ermitteln der ersten Parameter (I_{S}, ϕ_{S}) oder deren Mittel eingeht.

9. Verfahren nach einem der vorhergehenden Ansprüche mit Schritten zum Erzeugen der 3D-Punktewolke umfassend die folgenden Schritte:
- Senden eines Messstrahls (18) auf das Objekt (22), über einen Sender des 3D-Laserscanners (1),
- Empfangen eines Anteils (18') des Messstrahls (18), über einen Empfänger des 3D-Laserscanners (1),
- Ermitteln von Parametern Intensität (I_{A}) des Anteils (18') und Phasenverschiebung (ϕ_{A}) des Anteils (18') zum gesendeten Messstrahl (18), über eine Steuereinheit des 3D-Laserscanners (1),
- Erzeugen eines 3D-Punktes in Abhängigkeit dieser Parameter (I_{A}, ϕ_{A}), und
- Erzeugen der 3D-Punktewolke (26', 26) durch wiederholtes Senden des Messstrahls (18) aufs Objekt (22), Empfangen des Anteils (18') des Messstrahls (18), Ermitteln der Parameter (I_{A}, ϕ_{A}) und Erzeugen des 3D-Punktes, über die Steuereinheit.

10. Verfahren nach Anspruch 9, wobei die zweite Schrittfolge zudem folgende Schritte umfasst:
- Analysieren der 3D-Punktewolke (26') auf vom Streulichtanteil abhängige Wellen, über eine Steuereinheit des Laserscanners (1), und
- Ermitteln der zweiten Parameter aus den Wellen, über die Steuereinheit.

11. Verfahren nach Anspruch 10, wobei sich die vom Streulichtanteil abhängigen Wellen jeweils durch eine charakteristische Abhängigkeit ihrer Wellenlänge (1) und Wellenhöhe (h) von ihrer Pixel-Intensität (I_{P}) auszeichnen.

12. Verfahren nach Anspruch 10 oder 11, wobei die zweiten Parameter aus Intensitäten und Phasen der Wellen schätzbar oder ermittelbar sind.

13. Verfahren nach einem der Ansprüche 9 bis 12 umfassend folgenden Schritt
- Erzeugen des 3D-Punktes in Abhängigkeit der Parameter (I_{A}, ϕ_{A}) und der ersten Parameter (I_{S}, ϕ_{S}), über die Steuereinheit.

14. Verfahren nach einem der Ansprüche 9 bis 13 umfassend folgenden Schritt
- Korrektur der 3D-Punktewolke (26') in Abhängigkeit der Parameter (I_{A}, ϕ_{A}) und der zweiten Parameter, über die Steuereinheit.

15. Verfahren nach einem der vorhergehenden Ansprüche, wobei die Erfassung verhindert, unterbrochen und/oder eine Warnmeldung ausgegeben wird, wenn der ermittelte Streulichtanteil oberhalb eines vorbestimmten Grenzwertes liegt.

## Claims

1. A method for determining and compensating a proportion of stray light (I_{S}, ϕ_{S}) of a measuring beam (18) of a 3D laser scanner (1) by which a 3D point cloud (26, 26') of an object (22) to be detected can be generated through phase-based distance measurement, with
- a first step sequence via which first parameters (I_{S}, ϕ_{S}) of the proportion of stray light can be determined independently of the 3D point cloud and
- a second step sequence via which second parameters of the proportion of stray light can be determined dependent on the generated 3D point cloud (26'), wherein the method further comprises the following steps:
- compensating the proportion of stray light as a function of the first parameters (I_{S}, ϕ_{S}) and/or of the second parameters
- **characterized by**
- a selection of whether the first step sequence or the second step sequence, or both, is or are used to determine the different stray light parameters.

2. The method according to claim 1, wherein the first step sequence comprises the following step:
- emitting a measuring beam (18) via an emitter of the 3D laser scanner (1) into a space portion (24) away from the object which has no reflectivity or has a sufficiently low reflectivity.

3. The method according to claim 2, wherein the space portion (24) is a sky portion sufficiently free from objects, or wherein the space portion is a board, or a box having an absorbing coating.

4. The method according to claim 2 or 3, wherein the first step sequence moreover comprises the following steps:
- receiving the proportion of stray light of the emitted measuring beam via a receiver of the 3D laser scanner, and
- determining the first parameters (I_{S}, ϕ_{S}) of the proportion of stray light via a control unit of the laser scanner (1).

5. The method according to claim 4, wherein the first step sequence is carried out in a plurality of space portions (24) and is supplemented by a step of
- averaging the first parameters (I_{S}, ϕ_{S}) over the space portions (24) via the control unit.

6. The method according to any one of the claims 2 to 5, wherein the first parameters are at least an intensity (I_{S}) of the proportion of stray light and the phase shift (cps) thereof to the emitted measuring beam (18), or the mean values thereof.

7. The method according to any one of the claims 2 to 6, wherein the first step sequence is supplemented by a step of
- selecting the space portion or portions (24) at least as a function of their degree of reflection and/or their angle of elevation (β) and of an associated criterion via the control unit.

8. The method according to claim 7, wherein a subset of the selected space portions (24) is considered in the determination of the first parameters (I_{S}, ϕ_{S}) or the mean values thereof.

9. The method according to any one of the preceding claims comprising steps for generating the 3D point cloud comprising the following steps:
- emitting a measuring beam (18) onto the object (22) via an emitter of the 3D laser scanner (1),
- receiving a proportion (18') of the measuring beam (18) via a receiver of the 3D laser scanner (1),
- determining parameters of intensity (I_{A}) of the proportion (18') and phase shift (ϕ_{A}) of the proportion (18') to the emitted measuring beam (18) via a control unit of the 3D laser scanner (1),
- generating a 3D point as a function of said parameters (I_{A}, ϕ_{A}) and
- generating the 3D point cloud (26', 26) by repeatedly emitting the measuring beam (18) onto the object (22), receiving the proportion (18') of the measuring beam (18), determining the parameters (I_{A}, ϕ_{A}) and generating the 3D point via the control unit.

10. The method according to claim 9, wherein the second step sequence furthermore comprises the following steps:
- analyzing the 3D point cloud (26') for waves depending on the proportion of stray light via a control unit of the laser scanner (1), and
- determining the second parameters from the waves via the control unit.

11. The method according to claim 10, wherein each of the waves depending on the proportion of stray light excels by a characteristic dependence of their wave length (l) and wave height (h) on their pixel intensity (I_{P}).

12. The method according to claim 10 or 11, wherein the second parameters can be estimated or determined from intensities and phases of the waves.

13. The method according to any one of the claims 9 to 12 comprising the following step:
- generating the 3D point as a function of the parameters (I_{A}, ϕ_{A}) and the first parameters (I_{S}, ϕ_{S}) via the control unit.

14. The method according to any one of the claims 9 to 13 comprising the following step:
- correcting the 3D point cloud (26') as a function of the parameters (I_{A}, ϕ_{A}) and the second parameters via the control unit.

15. The method according to any one of the preceding claims, wherein the detection is suppressed, interrupted and/or a warning message is output, when the determined proportion of stray light is above a predetermined limit value.

## Revendications

1. Procédé de détermination et de compensation d'une proportion de lumière diffuse (I_{S}, ϕ_{S}) d'un faisceau de mesure (18) d'un scanner laser 3D (1), par l'intermédiaire duquel un nuage de points 3D (26, 26') d'un objet (22) à détecter peut être généré par l'intermédiaire d'une mesure de distance basée sur des phases, avec
- une première séquence d'étapes par l'intermédiaire de laquelle les premiers paramètres (I_{S}, ϕ_{S}) de la proportion de lumière diffuse peuvent être déterminés indépendamment du nuage de points 3D et
- une seconde séquence d'étapes, par l'intermédiaire de laquelle les seconds paramètres de la proportion de lumière diffuse peuvent être déterminés en fonction du nuage de points 3D généré (26'), dans lequel le procédé comprend en outre l'étape suivante :
- compensation de la proportion de lumière diffuse en fonction des premiers paramètres (I_{S}, ϕ_{S}) et/ou des seconds paramètres, **caractérisé par**
une sélection selon laquelle la première séquence d'étapes ou la seconde séquence d'étapes, ou les deux, est ou sont utilisées pour déterminer les différents paramètres de lumière diffuse.

2. Procédé selon la revendication 1, dans lequel la première séquence d'étapes comprend l'étape suivante :
- envoi d'un faisceau de mesure (18) par l'intermédiaire d'un émetteur du scanner laser 3D (1) dans une section spatiale (24) à l'écart de l'objet qui ne présente pas de réflectivité ou présente une réflectivité suffisamment faible.

3. Procédé selon la revendication 2, dans lequel la section spatiale (24) est une section de ciel suffisamment exempte d'objets, ou dans lequel la section spatiale est un panneau ou une boîte avec un revêtement absorbant.

4. Procédé selon la revendication 2 ou 3, dans lequel la première séquence d'étapes comprend en outre les étapes suivantes :
- réception de la proportion de lumière diffuse du faisceau de mesure émis par l'intermédiaire d'un récepteur du scanner laser 3D, et
- détermination des premiers paramètres (I_{S}, ϕ_{S}) de la proportion de lumière diffuse par l'intermédiaire d'un dispositif de commande du scanner laser (1).

5. Procédé selon la revendication 4, dans lequel la première séquence d'étapes est réalisée dans plusieurs sections spatiales (24) et complétée par une étape de
- moyennage des premiers paramètres (I_{S}, ϕ_{S}) sur les sections spatiales (24) par l'intermédiaire du dispositif de commande.

6. Procédé selon l'une quelconque des revendications 2 à 5, dans lequel les premiers paramètres sont au moins une intensité (I_{S}) de la proportion de lumière diffuse et son déphasage (ϕ_{S}) par rapport au faisceau de mesure émis (18), ou leurs moyens.

7. Procédé selon l'une quelconque des revendications 2 à 6, dans lequel la première séquence d'étapes est complétée par une étape de
- sélection de la ou des sections spatiales (24) au moins en fonction de leur degré de réflexion et/ou de leur angle d'élévation (β) et d'un critère associé par l'intermédiaire du dispositif de commande.

8. Procédé selon la revendication 7, dans lequel un sous-ensemble des sections spatiales sélectionnées (24) est inclus dans la détermination des premiers paramètres (I_{S}, ϕ_{S}) ou de leurs moyennes.

9. Procédé selon l'une quelconque des revendications précédentes avec des étapes de génération du nuage de points 3D comprenant les étapes suivantes :
- envoi d'un faisceau de mesure (18) vers l'objet (22) par l'intermédiaire d'un émetteur du scanner laser 3D (1),
- réception d'une proportion (18') du faisceau de mesure (18) par l'intermédiaire d'un récepteur du scanner laser 3D (1),
- détermination de paramètres d'intensité (I_{A}) de la proportion (18') et de déphasage (ϕ_{A}) de la proportion (18') par rapport au faisceau de mesure émis (18) par l'intermédiaire d'une unité de commande du scanner laser 3D (1),
- génération d'un point 3D en fonction de ces paramètres (I_{A}, ϕ_{A}), et
- génération du nuage de points 3D (26', 26) en émettant de manière répétée le faisceau de mesure (18) vers l'objet (22), réception de la proportion (18') du faisceau de mesure (18), détermination des paramètres (I_{A}, ϕ_{A}) et génération du point 3D par l'intermédiaire de l'unité de commande.

10. Procédé selon la revendication 9, dans lequel la seconde séquence d'étapes comprend en outre les étapes suivantes :
- analyse du nuage de points 3D (26') en fonction d'ondes dépendant de la proportion de lumière diffuse par l'intermédiaire d'un dispositif de commande du scanner laser (1), et
- détermination des seconds paramètres à partir des ondes par l'intermédiaire du dispositif de commande.

11. Procédé selon la revendication 10, dans lequel les ondes dépendant de la proportion de lumière diffuse sont caractérisées respectivement par une dépendance caractéristique de leur longueur d'onde (l) et de leur hauteur d'onde (h) de leur intensité de pixel (I_{P}).

12. Procédé selon la revendication 10 ou 11, dans lequel les seconds paramètres peuvent être estimés ou déterminés à partir d'intensités et de phases des ondes.

13. Procédé selon l'une quelconque des revendications 9 à 12 comprenant l'étape suivante
- génération du point 3D en fonction des paramètres (I_{A}, ϕ_{A}) et des premiers paramètres (I_{S}, ϕ_{S}) par l'intermédiaire du dispositif de commande.

14. Procédé selon l'une quelconque des revendications 9 à 13 comprenant l'étape suivante
- correction du nuage de points 3D (26') en fonction des paramètres (I_{A}, ϕ_{A}) et des seconds paramètres par l'intermédiaire du dispositif de commande.

15. Procédé selon l'une quelconque des revendications précédentes, dans lequel la détection est empêchée, interrompue et/ou un message d'avertissement est émis si la proportion de lumière diffuse déterminée est supérieure à une valeur limite prédéterminée.
